# EUROPÄISCHE PATENTANMELDUNG

(11) **EP 4 748 557 A1**
(43) Veröffentlichungstag der Anmeldung: **27.05.2026**
(21) Anmeldenummer: 24214817.9
(22) Anmeldetag: 22.11.2024
(51) Int. Cl.: B29C 64/118, B29C 64/25, B33Y 30/00, B33Y 40/00

(54) **3D-DRUCKER, 3D-DRUCKEINHEIT, STAPELANORDNUNG, WERKZEUGSYSTEM UND VERFAHREN**

(71) Anmelder: Festool GmbH, 73240 Wendlingen am Neckar (DE)
(72) Erfinder: Hartmann, Hannes, 73240 Wendlingen (DE); Knauss, Maximilian, 73240 Wendlingen (DE)

(57) **Zusammenfassung**

Die Erfindung betrifft einen 3D-Drucker (10) umfassend eine Werkstückauflage (18A) und einen Druckkopf (18B) zur additiven Herstellung eines Werkstücks, wobei zur Herstellung des Werkstücks die Werkstückauflage (18A) und der Druckkopf (18B) innerhalb eines Arbeitsraums (13C) in drei Raumrichtungen relativ zueinander positionierbar sind, wobei der 3D-Drucker eine Gleichspannungsschnittstelle (40) zur Versorgung des 3D-Druckers (10) mit elektrischer Energie aufweist, wobei eine Energiespeichereinheit (50) lösbar mit der Gleichspannungsschnittstelle (40) koppelbar ist.

## Beschreibung

Die Erfindung betrifft einen 3D-Drucker umfassend eine Werkstückauflage und einen Druckkopf zur additiven Herstellung eines Werkstücks, wobei zur Herstellung des Werkstücks die Werkstückauflage und der Druckkopf innerhalb eines Arbeitsraums in drei Raumrichtungen relativ zueinander positionierbar sind, wobei der 3D-Drucker eine Gleichspannungsschnittstelle zur Versorgung des 3D-Druckers mit elektrischer Energie aufweist.

Die Erfindung betrifft außerdem eine 3D-Druckeinheit umfassend einen solchen 3D-Drucker und eine an der Gleichspannungsschnittstelle des 3D-Druckers lösbar befestigte Energiespeichereinheit.

Auch betrifft die Erfindung eine Stapelanordnung umfassend ein erstes und ein zweites Stapelelement, wobei das erste Stapelelement einen solchen 3D-Drucker oder eine solche 3D-Druckeinheit umfasst und das zweite Stapelelement eine Systemkiste umfasst.

Ferner betrifft die Erfindung ein Werkzeugsystem, das einen solchen 3D-Drucker, ein elektrisches Kraftwerkzeug mit einer kraftwerkzeugseitigen Akkupack-Schnittstelle zur elektrischen und mechanischen Kopplung des elektrischen Kraftwerkzeugs mit einem Akkupack, sowie eine Energiespeichereinheit, welche als Akkupack für ein elektrisches Kraftwerkzeug ausgebildet ist.

CN108527837A offenbart einen 3D-Drucker mit einer in den 3D-Drucker integrierten Energiespeichereinheit zur Bereitstellung von Energie während eines Stromausfalls. Der 3D-Drucker wird also üblicherweise über ein Netzkabel mit Energie versorgt, sodass sichergestellt werden kann, dass die integrierte Energiespeichereinheit im Falle eines Stromausfalls geladen ist. Wird der 3D-Drucker jedoch vorwiegend netzunabhängig betrieben ist dies nicht der Fall.

Das bedeutet, dass die Energie, die mittels der Gleichspannungsschnittstelle bereitgestellt werden kann, endlich ist. Im Gegensatz dazu ist es jedoch für einen Nutzer des 3D-Druckers wünschenswert, möglichst wenige Beschränkungen bei der Nutzung des 3D-Durckers zu haben. Insbesondere ist es für den Nutzer vorteilhaft, wenn er an die Gleichspannungsschnittstelle unterschiedliche Energiequellen anschließen kann.

Es ist daher die Aufgabe der Erfindung einen 3D-Drucker der eingangs erwähnten Art bereitzustellen, der von einem Nutzer des 3D-Druckers unabhängig von einem Netzanschluss und als Bestandteil eines Werkzeugsystems betrieben werden kann.

Die Aufgabe wird dadurch gelöst, dass eine Energiespeichereinheit (insbesondere werkzeuglos) lösbar mit der Gleichspannungsschnittstelle koppelbar ist. Dadurch ist es möglich die Energiespeichereinheit einfach auszutauschen und den 3D-Drucker mit einer weiteren Energiespeichereinheit (weiter) zu betreiben. Wenn der 3D-Drucker beispielsweise bei einem ersten Arbeitsvorgang des 3D-Druckers mit einer ersten Energiespeichereinheit betrieben wird, kann es sein, dass nach Abschluss des ersten Arbeitsvorgangs die in der ersten Energiespeichereinheit vorhandene Energie nicht mehr ausreicht, um den 3D-Drucker zu betreiben oder die erste Energiespeichereinheit nicht mehr genügend Energie bereitstellen kann, um einen zweiten Arbeitsvorgang des 3D-Druckers abzuschließen. Ist die Energiespeichereinheit einfach auszutauschen, indem diese (insbesondere werkzeuglos) von dem 3D-Drucker gelöst werden kann, kann der Nutzer den 3D-Drucker mit der weiteren Energiespeichereinheit, die beispielsweise noch voll ist oder genügend Energie bereitstellen kann, weiter betreiben.

Zweckmäßigerweise ist in dem 3D-Drucker ein nicht-flüchtiger Speicher zum Speichern von Daten, beispielsweise einer zu druckenden Geometrie, angeordnet. Bei Verwendung eines nicht-flüchtigen Speichers zur Speicherung der zu druckenden Geometrie steht die zu druckende Geometrie auch nach einem Stromausfall dem 3D-Drucker weiter zur Verfügung und muss dem 3D-Drucker nicht erst wieder zur Verfügung gestellt werden.

Unter einem Arbeitsvorgang wird der Prozess zum (additiven) Herstellen eines Werkstücks verstanden. Der Arbeitsvorgang kann die folgenden Prozessschritte aufweisen: Empfangen von Daten, beispielsweise einer zu druckenden Geometrie, Druckvorbereitung, beispielsweise vorheizen des Druckkopfes und/oder der Werkstückauflage, Drucken der Geometrie.

Zweckmäßigerweise ist es vorgesehen, dass die einzelnen Schritte des Arbeitsvorgangs in dem nicht-flüchtigen Speicher abgespeichert werden. Besonders vorteilhaft ist es, wenn während des Druckens der Geometrie die Position des Druckkopfes fortwährend in dem nicht-flüchtigen Speicher abgespeichert wird. Auf diese Weise kann der Druck auch nach einem Stromausfall an der letzten Position des Druckkopfes fortgesetzt werden.

Gemäß einer Ausführungsform ist vorgesehen, dass die Gleichspannungsschnittstelle eine mechanische Schnittstelle zur lösbaren Befestigung der Energiespeichereinheit an dem 3D-Drucker aufweist. Es ist vorteilhaft, wenn die mechanische Schnittstelle so angeordnet ist, dass die Energiespeichereinheit für den Nutzer von außen zugänglich ist, was die Handhabe für den Nutzer vereinfacht. Insbesondere ist die Energiespeichereinheit direkt von außen zugänglich, ohne dass dafür das Gehäuse des 3D-Druckers auseinandergenommen werden muss oder ein Teil des Gehäuses abgenommen werden muss oder der (auf seinem Boden stehende) 3D-Drucker umpositioniert werden muss. Die mechanische Schnittstelle weist vorzugsweise Gleitschienen und zumindest eine Verrastung auf, sodass die Energiespeichereinheit mit der Gleichspannungsschnittstelle lösbar koppelbar ist. Mittels der Verrastung wird sichergestellt, dass die Energiespeichereinheit sicher mit der Gleichspannungsschnittstelle gekoppelt ist und die Energiespeichereinheit nicht ohne lösen der Verrastung von der Gleichspannungsschnittstelle getrennt werden kann. Somit wird die Betriebssicherheit verbessert und unerwünschte Ausfälle durch eine versehentlich entfernte Energiespeichereinheit vermieden.

Gemäß einer Erfindungsvariante weist der 3D-Drucker eine Datenschnittstelle zum Austausch von Daten mit einem externen Gerät auf. Mittels der Datenschnittstelle ist es möglich für den Arbeitsvorgang notwendige Instruktionen, beispielsweise die zu druckende Geometrie, an den 3D-Drucker zu senden oder Informationen über den Arbeitsvorgang an das externe Gerät zu senden. Das externe Gerät kann beispielsweise ein Computer, ein Smartphone oder ein Tablet sein. Die Instruktionen können beispielsweise eine von dem 3D-Drucker zu druckende Geometrie, welche beispielsweise mit Hilfe des externen Geräts erstellt oder von diesem aus einer Datenbank bezogen wurde, beinhalten. Die Informationen können beispielsweise eine Rückmeldung des 3D-Druckers an das externe Gerät, und damit den Nutzer, über einen Status des aktuellen Arbeitsvorgangs und/oder einen Betriebsstatus des 3D-Druckers sein.

Die Datenschnittstelle ist vorzugsweise im Bereich oder an der Gleichspannungsschnittstelle angeordnet. Somit können die Datenschnittstelle und die Gleichspannungsschnittstelle beide lösbar mit der Energiespeichereinheit gekoppelt werden, wenn die Energiespeichereinheit angeschlossen wird. Alternativ kann es vorgesehen sein, dass die Datenschnittstelle dazu ausgebildet ist, drahtlos mit dem externen Gerät zu kommunizieren. In diesem Fall ist die Datenschnittstelle als ein Sender und/oder Empfänger für drahtlose Kommunikationssignale, beispielsweise als ein Bluetooth-Modul, ausgebildet.

Der 3D-Drucker weist vorteilhafterweise ein Gehäuse auf, wobei das Gehäuse den Arbeitsraum umgibt. In anderen Worten sind die Werkstückauflage, der Druckkopf und der Arbeitsraum in dem Gehäuse aufgenommen.

Das Gehäuse weist eine Gehäuseöffnung auf durch welche hindurch der Arbeitsraum für einen Nutzer des 3D-Druckers zugänglich ist. Die Gehäuseöffnung ist durch ein Wandsegment verschließbar. Das Wandsegment ist zweckmäßigerweise transparent. Vorteilhafterweise verschließt das Wandsegment die Gehäuseöffnung staubdicht. Zwischen dem Wandsegment und dem Gehäuse ist zweckmäßigerweise eine Dichtung angeordnet.

Zweckmäßigerweise weist das Gehäuse eine Wärmeisolierung auf. Die Wärmeisolierung umgibt vorteilhafterweise den Arbeitsraum zumindest teilweise, sodass die Energie zum Beheizen des Drucckopfes und/oder der Werkstückauflage reduziert ist. Die Wärmeisolierung ist zweckmäßigerweise ein wärmeisolierendes Material, welches zwischen dem Gehäuse und dem Arbeitsraum an dem Gehäuse angeordnet ist. Die Wärmeisolierung ist beispielsweise eine Isolierschicht. Somit sind das Gehäuse und der Arbeitsraum zumindest bereichsweise durch eine Isolierschicht voneinander getrennt oder es ist zumindest bereichsweise eine Isolierschicht zwischen dem Gehäuse und dem Arbeitsraum angeordnet.

Zweckmäßigerweise weist das Gehäuse eine erste Gehäusehälfte und eine zweite Gehäusehälfte auf, die entlang einer Gehäusetrennung einander gegenüberliegen.

Zweckmäßigerweise wird die Isolierschicht von zwei Halbschalen, die vorteilhafterweise je in eine der Gehäusehälften eingepasst sind, gebildet.

Zweckmäßigerweise weist das Gehäuse einen Deckel auf, mit dem ein Deckelfach verschließbar ist, wobei in dem Deckelfach eine Filamentspulenaufnahme, insbesondere ein Aufnahmedorn, zur rotativen Lagerung einer Filamentspule, angeordnet ist.

Die Gleichspannungsschnittstelle ist an dem Gehäuse angeordnet, wobei die Gleichspannungsschnittstelle vorzugsweise in einer zur Aufnahme der Energiespeichereinheit ausgebildeten Ausnehmung des Gehäuses angeordnet ist. Die Ausnehmung ist vorteilhafterweise so bemessen und die Gleichspannungsschnittstelle so in der Ausnehmung angeordnet, dass eine Energiespeichereinheit zur Versorgung des 3D-Druckers mit Energie vollständig in der Ausnehmung aufgenommen ist, wenn die Energiespeichereinheit mit der Gleichspannungsschnittstelle gekoppelt ist. Somit kann die Energiespeichereinheit auch beim Transport des 3D-Druckers mit der Gleichspannungsschnittstelle gekoppelt sein, ohne dass die Energiespeichereinheit störend über die äußeren Abmessungen des Gehäuses hervorsteht.

Eine erfindungsgemäße Variante sieht vor, dass die Gleichspannungsschnittstelle des 3D-Druckers zumindest zwei Schnittstellen zur Versorgung des 3D-Druckers mit elektrischer Energie aufweist. Somit können zwei Energiespeichereinheiten, beispielsweise zwei Akkupacks für ein elektrisches Kraftwerkzeug, mit dem 3D-Drucker gekoppelt werden. Somit kann dem 3D-Drucker eine größere Menge an Energie zur Verfügung gestellt kann.

Beispielsweise kann es so sein, dass die Gleichspannungsschnittstelle ausgebildet ist, eine Energiespeichereinheit, insbesondere ein Akkupack, an zwei unterschiedlichen Positionen aufzunehmen und/oder zwei identische Energiespeichereinheiten, insbesondere zwei identische Akkupacks, gleichzeitig aufzunehmen. In anderen Worten können zwei Energiespeichereinheiten gleicher Bauart und/oder mit gleicher energiespeichereinheitseitiger Schnittstelle gleichzeitig an den 3D-Drucker angeschlossen werden.

Alternativ oder zusätzlich kann es vorgesehen sein, dass die Gleichspannungsschnittstelle eine erste Gleichspannungsschnittstelle ist und der 3D-Drucker weiter eine zweite Gleichspannungsschnittstelle zur Versorgung des 3D-Druckers mit Energie aufweist, wobei die erste und die zweite Gleichspannungsschnittstelle unterschiedliche mechanische und/oder elektrische Schnittstellen aufweisen.

Vorzugsweise kann es vorgesehen sein, dass die erste und die zweite Gleichspannungsschnittstelle ausgebildet sind mit unterschiedlichen Arten von energiespeichereinheitseitigen Schnittstellen gekoppelt zu werden. In anderen Worten sind die erste und die zweite Gleichspannungsschnittstelle ausgebildet, sodass der 3D-Drucker mit unterschiedlichen Arten von Energiespeichereinheiten betreibbar ist. Beispielsweise kann es vorgesehen sein, dass die erste Gleichspannungsschnittstelle zur Aufnahme eines Akkupacks eines ersten Systems und die zweite Gleichspannungsschnittstelle zur Aufnahme eines Akkupacks eines anderen, von dem ersten System verschiedenen, Systems ausgebildet ist. Ebenso kann es vorgesehen sein, dass die erste Gleichspannungsschnittstelle zur Aufnahme einer Energiespeichereinheit mit einer ersten Nennspannung, beispielsweise eines Akkupacks mit 18 V oder 36 V, und die zweite Gleichspannungsschnittstelle zur Aufnahme einer Energiespeichereinheit mit einer höheren Nennspannung, beispielsweise 56 V oder 108 V, ausgebildet ist.

Vorzugsweise kann es vorgesehen sein, dass die erste Gleichspannungsschnittstelle ausgebildet ist mit einem Akkupack gekoppelt zu werden und dass die zweite Gleichspannungsschnittstelle ausgebildet ist mit einer Energiequelle gekoppelt zu werden, die insbesondere kein Akkupack eines Kraftwerkzeugs ist. Beispielsweise ist die zweite Gleichspannungsschnittstelle ein Anschluss für ein Netzgerät, um den 3D-Drucker mit elektrischer Energie zu versorgen.

Die energiespeichereinheitseitige Schnittstelle kann auch als Akkupack-Schnittstelle bezeichnet werden, wenn die Energiespeichereinheit ein Akkupack ist. Das Akkupack ist insbesondere ein Akku-Modul zum Versorgen eines elektrischen Kraftwerkzeugs mit Energie. Akkupacks mit gleicher Akkupack-Schnittstelle können auch als Systemakkupacks bezeichnet werden.

Unter der energiespeichereinheitseitigen Schnittstelle bzw. der Akkupack-Schnittstelle werden sowohl Kopplungsmittel zum mechanischen Halten der Energiespeichereinheit bzw. des Akkupacks an der mechanischen Schnittstelle der Gleichstromschnittstelle des 3D-Druckers, als auch die Anordnung von elektrischen Kontakten der energiespeichereinheitseitigen Schnittstelle verstanden, so dass ein elektrischer Kontakt zwischen Energiespeichereinheit bzw. Akkupack und dem 3D-Drucker hergestellt ist, wenn die Energiespeichereinheit bzw. das Akkupack mit der Gleichspannungsschnittstelle gekoppelt ist. Systemakkupacks weisen zudem vorteilhafterweise die gleiche Nennspannung auf, sodass auch eine Kompatibilität der elektrischen Komponenten sichergestellt ist.

Beispielsweise kann vorgesehen sein, dass während eines Arbeitsvorgangs des 3D-Druckers eines der beiden Akkupacks ausgetauscht werden kann, während der Drucker weiterhin Energie aus dem anderen Akkupack bezieht, ohne dass der Arbeitsvorgang unterbrochen werden muss. Es kann also eines der Akkupacks während eines Arbeitsvorgangs des 3D-Druckers (insbesondere werkzeuglos) von seiner Gleichspannungsschnittstelle abgezogen werden, während das andere Akkupack den 3D-Drucker weiterhin mit Energie versorgt. Somit wird der Arbeitsvorgang durch das Abziehen des einen Akkupacks nicht unterbrochen. Im Folgenden kann ein weiterer Akkupack an die Gleichspannungsschnittstelle des 3D-Druckers angesteckt werden. Somit kann der 3D-Drucker wieder aus beiden Akkupacks mit Energie versorgt werden.

Gemäß eines Ausführungsbeispiels kann es so sein, dass eine der Gleichspannungsschnittstellen, insbesondere die erste Gleichspannungsschnittstelle, auf einer ersten Gehäuseseite des Gehäuses angeordnet ist und eine andere der Gleichspannungsschnittstellen, insbesondere die zweite Gleichspannungsschnittstelle, auf einer, insbesondere der ersten Gehäuseseite gegenüberliegenden, zweiten Gehäuseseite, angeordnet ist. Auf diese Weise kann eine gleichmäßigere Gewichtsverteilung erreicht werden und der 3D-Drucker somit besser getragen werden.

Alternativ oder zusätzlich kann es so sein, dass die zumindest zwei Gleichspannungsschnittstellen, insbesondere die erste Gleichspannungsschnittstelle und die zweite Gleichspannungsschnittstelle, auf der gleichen Gehäuseseite des Gehäuses angeordnet sind. Somit sind die Gleichspannungsschnittstellen für den Nutzer bequem von einer Seite zugänglich und an den Gleichspannungsschnittstellen angekoppelte Energiespeichereinheiten gut einsehbar.

Gemäß einer Erfindungsvariante weist der 3D-Drucker, insbesondere das Gehäuse, eine Kopplungsschnittstelle auf, mit der eine lösbare vertikalzugfeste Kopplung zu einer oder mehreren Systemkiste/-n herstellbar ist, so dass der 3D-Drucker zusammen mit der einen oder mehreren Systemkiste/-n einen vertikalen Stapel bilden kann. Vorteilhafterweise ist das Gehäuse als stapelbare Transportkiste, insbesondere als Systemkiste, ausgeführt.

Die horizontalen Abmessungen einer Systemkiste sind fest vorgegeben, damit die Systemkiste kompatibel zu anderen Systemkisten des gleichen Systems ist. Eine Systemkiste ist ferner dadurch gekennzeichnet, dass sie eine Kopplungsschnittstelle aufweist, die mit den Kopplungsschnittstellen anderer Systemkisten des gleichen Systems kompatibel ist.

Die Systemkiste ist beispielsweise eine Werkzeugkiste zum Transportieren von handgehaltenen elektrischen Kraftwerkzeugen. Handgehaltene elektrische Kraftwerkzeuge umfassen beispielsweise elektrische Handkreissägen, elektrische Schleifmaschinen, elektrische Schrauber, elektrische Bohrmaschinen.

Vorteilhafterweise umfasst die Kopplungsschnittstelle eine untere Kopplungsschnittstelle, mit der in einem Zustand, in dem der 3D-Drucker auf eine untere Systemkiste aufgesetzt ist, eine untere lösbare, vertikalzugfeste Kopplung zu der unteren Systemkiste herstellbar ist, und/oder eine obere Kopplungsschnittstelle umfasst, mit der in einem Zustand, in dem eine obere Systemkiste auf den 3D-Drucker aufgesetzt ist, eine obere lösbare, vertikalzugfeste Kopplung zu der oberen Systemkiste herstellbar ist.

Außerdem wird die Aufgabe gelöst durch eine 3D-Druckeinheit, die einen erfindungsgemäßen 3D-Drucker und eine Energiespeichereinheit in Gestalt eines Akkupacks für ein elektrisches Kraftwerkzeug aufweist. Die Energiespeichereinheit ist dabei (insbesondere werkzeuglos) lösbar an der Gleichspannungsschnittstelle des 3D-Druckers lösbar befestigt.

Vorteilhafterweise weist das Akkupack eine Akkupack-Datenschnittstelle und eine mit der Akkupack-Datenschnittstelle kommunizierende Drahtlos-Datenschnittstelle zur Kommunikation mit einem/dem externen Gerät auf. In diesem Fall ist die Akkupack-Datenschnittstelle mit der Datenschnittstelle des 3D-Druckers gekoppelt, wenn der Akkupack mit der Gleichspannungsschnittstelle gekoppelt ist. Die Drahtlos-Datenschnittstelle zur Kommunikation mit dem externen Gerät kann beispielsweise als Bluetooth-Modul ausgeführt sein. In diesem Fall benötigt der 3D-Drucker also keine eigene Datenschnittstelle, die dazu ausgebildet ist, drahtlos mit dem externen Gerät zu kommunizieren.

Außerdem wird die Aufgabe gelöst durch eine Stapelanordnung umfassend ein erstes und ein zweites Stapelelement, wobei das erste Stapelelement einen erfindungsgemäßen 3D-Drucker oder eine erfindungsgemäße 3D-Druckeinheit umfasst und das zweite Stapelelement eine Systemkiste. Das zweite Stapelelement ist vorzugsweise zur Aufnahme eines elektrischen Kraftwerkzeugs ausgebildet. Vorzugsweise ist in dem zweiten Stapelelement ein elektrisches Kraftwerkzeug und/oder Filamentspulen angeordnet. In der Stapelanordnung ist das erste Stapelelement auf das zweite Stapelelement aufgesetzt oder das zweite Stapelelement ist auf das erste Stapelelement aufgesetzt, wobei die beiden Stapelelemente vertikalzugfest lösbar miteinander gekoppelt sind, um von einem Nutzer getragen zu werden. Auf diese Weise kann der Nutzer den 3D-Drucker auf einfache Art und Weise zusammen mit anderen Systemkisten, beispielsweise zum Transport von elektrischen Kraftwerkzeugen, tragen. Vorzugsweise kann die Stapelanordnung wahlweise eine erste Konfiguration oder eine zweite Konfiguration einnehmen. In der ersten Konfiguration ist das erste Stapelelement mit seiner Unterseite auf die Oberseite des zweiten Stapelelement aufgesetzt und mit diesem vertikal zugfest lösbar gekoppelt und in der zweiten Konfiguration ist das zweite Stapelelement mit seiner Unterseite auf die Oberseite des ersten Stapelelements aufgesetzt und mit diesem vertikal zugfest lösbar gekoppelt.

Außerdem wird die Aufgabe gelöst durch ein Werkzeugsystem, welches einen erfindungsgemäßen 3D-Drucker, ein elektrisches Kraftwerkzeug mit einer kraftwerkzeugseitigen Akkupack-Schnittstelle zur Kopplung des elektrischen Kraftwerkzeugs mit einem Akkupack, sowie eine Energiespeichereinheit in Gestalt eines Akkupacks umfasst. Das Akkupack ist wahlweise entweder mit der kraftwerkzeugseitigen Akkupack-Schnittstelle des elektrischen Kraftwerkzeugs oder mit der Gleichspannungsschnittstelle des 3D-Druckers lösbar verbindbar, um entweder das elektrische Kraftwerkzeug oder den 3D-Drucker mit Energie zu versorgen. Da das Akkupack sowohl mit dem 3D-Drucker als auch mit dem elektrischen Kraftwerkzeug koppelbar ist, kann der Nutzer beim netzunabhängigen Betrieb, beispielsweise auf einer Baustelle, ein geladenes Akkupack aus einer Vielzahl von Systemakkupacks auswählen und verwenden, um den 3D-Drucker zu betreiben. Somit kann der Betrieb des 3D-Druckers netzunabhängig sichergestellt werden.

Vorteilhafterweise sind die kraftwerkzeugseitige Akkupack-Schnittstelle des elektrischen Kraftwerkzeugs und die Gleichspannungsschnittstelle des 3D-Druckers identisch ausgebildet.

Beispielsweise ist das elektrische Kraftwerkzeug eine elektrische Handkreissäge, eine elektrische Schleifmaschine, ein elektrischer Schrauber, eine elektrische Bohrmaschine, ein mobiler Staubsauger oder ein elektrisch betriebenes Exoskelett.

Außerdem wird die Aufgabe gelöst durch ein Verfahren zum Betreiben des 3D-Druckers, dass die Schritte umfasst:
- Betreiben des 3D-Druckers unabhängig von einem Netzanschluss mittels eines Akkupacks,
- Werkzeugloses Abziehen des Akkupacks von der Gleichspannungsschnittstelle des 3D-Druckers,
- Weiterbetrieb des 3D-Druckers,
- Anstecken eines weiteren Akkupacks an die Gleichspannungsschnittstelle des 3D-Druckers.

Vorzugsweise wird der 3D-Drucker während des Weiterbetriebs durch ein Akkupack betrieben, welches zusätzlich zu dem abgezogenen Ackupack und dem weiteren Akkupack vorhanden und/oder von diesen verschieden ist.

Die Erfindung wird nachstehend anhand verschiedener Ausführungsbeispiele erläutert, die in den beigefügten Zeichnungen gezeigt sind. Es zeigen:
Figur 1 eine erfindungsgemäße 3D-Druckeinheit in perspektivischer Ansicht von schräg vorne,
Figur 2 die 3D-Druckeinheit aus Figur 1 in perspektivischer Ansicht von schräg hinten,
Figur 3 die 3D-Druckeinheit aus Figur 1 in perspektivischer Ansicht von schräg unten,
Figur 4 eine Explosionsdarstellung des Gehäuses der 3D-Druckeinheit,
Figur 5 eine Stapelanordnung aufweisend die 3D-Druckeinheit aus Figur 1,
Figur 6 eine Kopplungsschnittstelle der Stapelanordnung im Schnitt,
Figur 7 eine weitere Kopplungsschnittstelle der Stapelanordnung im Schnitt,
Figur 8 ein Werkzeugsystem aufweisend den 3D-Drucker, ein elektrisches Kraftwerkzeug und zwei Akkupacks, sowie
Figur 9 eine erfindungsgemäße 3D-Druckeinheit mit geöffnetem Deckelfach und einer Systemkiste zum Transport von Filamentspulen.

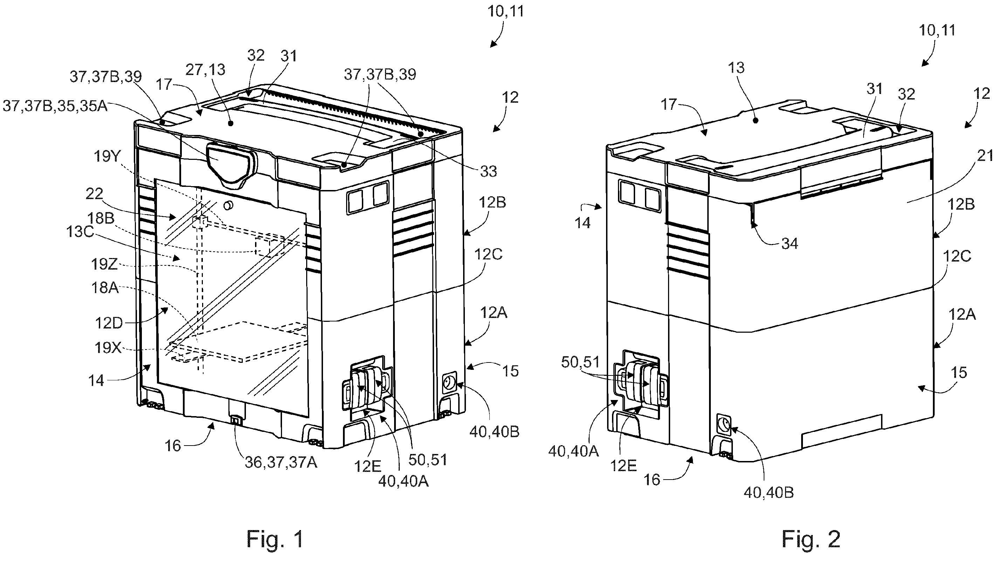

Figuren 1 bis 3 zeigen die 3D-Druckeinheit 11 umfassend einen 3D-Drucker 10 und mit dem 3D-Drucker 10 elektrisch und mechanisch gekoppelte Energiespeichereinheiten 50, die als Akkupacks 51 ausgeführt sind, zur Versorgung des 3D-Druckers 10 mit elektrischer Energie.

Der 3D-Drucker 10 umfasst eine Werkstückauflage 18A und einen Druckkopf 18B zur additiven Herstellung eines nicht dargestellten Werkstücks. Das Werkstück ist auf der Werkstückauflage 18A positionierbar bzw. wird von dem Druckkopf 18B auf der Werkstückauflage 18A hergestellt. Die Werkstückauflage 18A und der Druckkopf 18B sind innerhalb eines Arbeitsraums 13C des 3D-Druckers 10 angeordnet.

Der 3D-Drucker 10 weist ein Gehäuse 12 mit einer Gehäuseöffnung 12D auf, durch welche hindurch der Arbeitsraum 13C für einen Nutzer des 3D-Druckers zugänglich ist. Die Gehäuseöffnung 12D ist auf einer Vorderseite 14 des 3D-Druckers 10 angeordnet. Die Gehäuseöffnung 12D ist durch ein Wandsegment 22 verschließbar. Das Wandsegment 22 ist in dem Beispiel transparent, so dass ein Nutzer des 3D-Druckers 10 den Arbeitsraum 13C, insbesondere die Werkstückauflage 18A einsehen kann. Vorteilhafterweise verschließt das Wandsegment 22 die Gehäuseöffnung staubdicht. Zwischen dem Wandsegment und dem Gehäuse 12 ist zweckmäßigerweise eine Dichtung angeordnet.

Der Vorderseite 14 bzw. der Gehäuseöffnung 12D gegenüber ist der Arbeitsraum 13C durch eine Rückwand 21 begrenzt. Die Außenseite der Rückwand 21 bildet die Rückseite 15 des Gehäuses 12.

Das Gehäuse 12 weist eine Oberseite 17 und eine Unterseite 16 auf zwischen denen sich Seitenwände des Gehäuses 12 erstrecken. Die Seitenwände umfassen die Vorderseite 14 und die Rückseite 15. Die Oberseite 17 wird von einer Deckenwand 27 gebildet. Die Unterseite wird von einer Bodenwand 26 gebildet.

Die Werkstückauflage 18A und der Druckkopf 18B sind innerhalb des Arbeitsraums 13C in drei Raumrichtungen relativ zueinander positionierbar. In dem in Figur 1 gezeigten Beispiel ist die Werkstückauflage 18A mittels einer Führungs-Antriebseinheit 19X linear in einem Auflage-Verfahrbereich zwischen der Vorderseite 14 und der Rückseite 15 verfahrbar und der Druckkopf 18B ist in zwei Raumrichtungen senkrecht zum Auflage-Verfahrbereich verfahrbar. Der Druckkopf 18B ist mittels Führungs-Antriebseinheiten 19Y, 19Z in einer Ebene parallel zur Vorderseite 14 verfahrbar.

Das Gehäuse 12 des 3D-Druckers 10 weist in dem gezeigten Beispiel ein erstes Gehäuseteil 12A und ein zweites Gehäuseteil 12B auf, die einander entlang einer Gehäusetrennung 12C gegenüberliegen. Das erste Gehäuseteil 12A umfasst die Bodenwand 26. Die Seitenwände des Gehäuses werden von der Gehäusetrennung 12C parallel zur Bodenwand 26 geteilt.

Das Gehäuse 12 weist einen Deckel 13 auf, der die Deckenwand 27 umfasst und dazu dient ein Deckelfach 13A für einen Nutzer zugänglich zu machen.

Das Gehäuse 12, insbesondere das zweite Gehäuseteil 12B, weist einen Zwischenboden 28 auf, der parallel zu der Bodenwand 26 und der Deckenwand 27 im inneren des Gehäuses angeordnet ist, um den Arbeitsraum 13C von dem Deckelfach 13A zu trennen.

Der Deckel 13 ist mittels eines Deckelscharniers 34 an dem zweiten Gehäuseteil 12B drehbar gelagert.

An dem Deckel 13 ist ein Tragegriff 31 angeordnet, der vorteilhafterweise mittels eines Griffgelenks 33 drehbar an dem Deckel 13 gelagert ist. In einem eingeklappten Zustand ist der Tragegriff 31 vorteilhafterweise in einer Tragegriffaufnahme 32 des Deckels 13 aufgenommen, so dass der Tragegriff im eingeklappten Zustand nicht (nach oben) über die Deckenwand 27 hervorsteht.

Der 3D-Drucker weist ein Bedienelement 66 auf, über das der 3D-Drucker ein- und ausgeschaltet werden kann. Das Bedienelement 66 ist in dem Ausführungsbeispiel an der Seitenwand des Gehäuses 12 angeordnet.

In dem Deckelfach 13A ist beispielsweise ein Aufnahmedorn 71 zur Aufnahme einer Filamentspule angeordnet. Exemplarisch sind der Aufnahmedorn 71 an den Zwischenboden 28 angeformt und/oder integral mit diesem ausgebildet ist. Alternativ kann vorgesehen sein, dass der Aufnahmedorn 71 aus Metall besteht und eine Basis aufweist, die in von dem Zwischenboden 28 umspritzt ist. Vorteilhafterweise ist in dem Zwischenboden 28 eine Durchgangsloch vorgesehen, so dass das auf der Filamentspule 70 aufgewickelte Filament durch das Durchgangsloch direkt vom Deckelfach 13A zum Druckkopf 18B geführt werden kann.

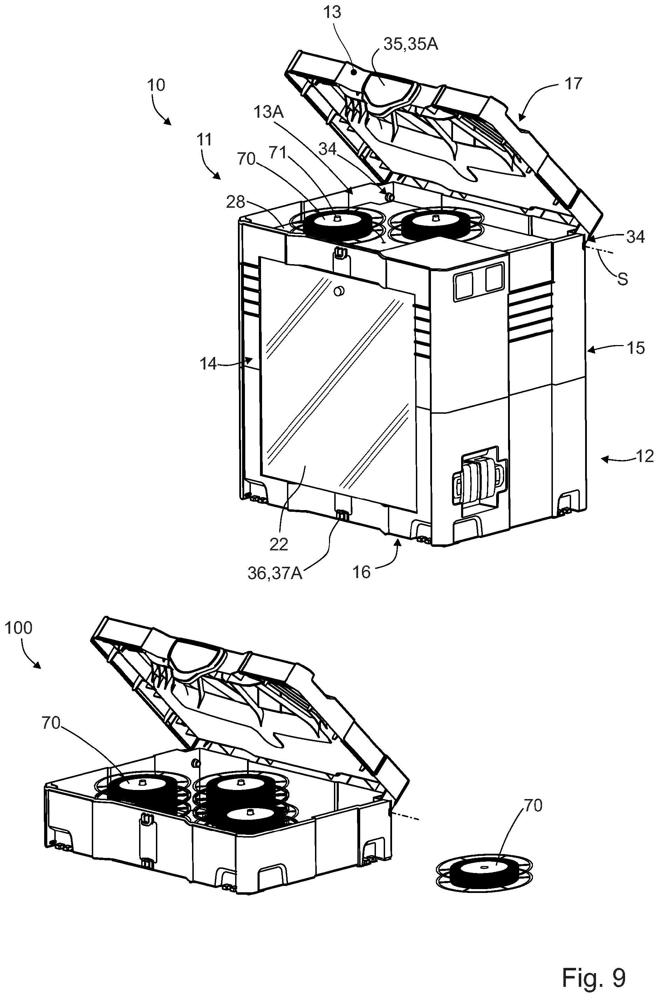

Vorzugsweise sind in dem Deckelfach 13A zumindest zwei Filamentspulen 70 angeordnet, beispielsweise auf zwei Aufnahmedornen 71. Auf diese Weise können beispielsweise Filamente unterschiedlicher Farbe und/oder unterschiedlicher Materialien einfach zum Druckkopf 18B geführt werden, wie dies beispielsweise in Figur 9 dargestellt ist. Beispielsweise können auch verschiedene Materialien in einem Druck verarbeitet werden, z.B. ABS, PLA, TBU. Exemplarisch sind die Filamentspulen 70 mit ihren Spulenachsen senkrecht zur Werkstückauflage 18a ausgerichtet.

Zwischen dem Arbeitsraum 13C und dem Gehäuse 12 ist vorteilhafterweise eine Isolierschicht 72 angeordnet, wobei die Isolierschicht in dem Beispiel die Gehäuseöffnung 12D nicht verdeckt.

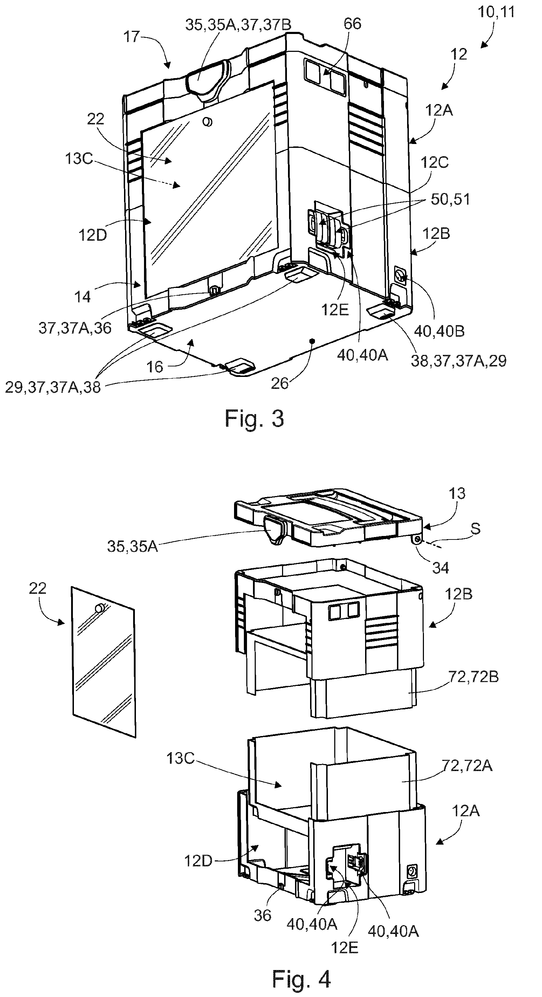

Wie Figur 4 zeigt, wird die Isolierschicht 72 von zwei Halbschalen gebildet, wobei eine der Halbschalen der Isolierschicht 72 in das erste Gehäuseteil 12A und die zweite der Halbschalen der Isolierschicht 72 in das zweite Gehäuseteil 12B eingesetzt sind. Die in das erste Gehäuseteil 12A eingesetzte Halbschale kann auch als erste Isolierschicht 72A und die in das zweite Gehäuseteil 12B eingesetzte Halbschale als zweite Isolierschicht 72B bezeichnet werden. Die beiden Halbschalen sparen die Gehäuseöffnung 12D aus, so dass ein Nutzer Zugang zum Arbeitsraum 13C hat, wenn das Wandsegment 22 geöffnet bzw. entfernt wird oder der Nutzer den Arbeitsraum 13C einsehen kann, wenn das Wandsegment 22 die Gehäuseöffnung 12D verschließt.

Der 3D-Drucker 10 kann eine Kopplungsschnittstelle 37 aufweisen, mit der eine lösbare vertikalzugfeste Kopplung zu einer oder mehreren Systemkiste/-n 100 herstellbar ist, so dass der 3D-Drucker 10 zusammen mit der einen oder den mehreren Systemkiste/-n 100 einen vertikalen Stapel bilden kann, der von einem Nutzer getragen werden kann, wenn der Nutzer den Stapel an dessen Oberseite ergreift und anhebt.

Das Gehäuse 12 ist in dem gezeigten Beispiel als stapelbare Transportkiste ausgeführt, die mit Systemkisten 100 eines Werkzeugsystems koppelbar ist.

Die horizontalen Abmessungen einer Systemkiste 100 sind fest vorgegeben, damit die Systemkiste 100 kompatibel zu anderen Systemkisten des gleichen Systems ist. Eine Systemkiste ist ferner dadurch gekennzeichnet, dass sie eine Kopplungsschnittstelle aufweist, die mit den Kopplungsschnittstellen anderer Systemkisten des gleichen Systems kompatibel ist.

Die Systemkiste 100 ist beispielsweise eine Werkzeugkiste zum Transportieren von handgehaltenen elektrischen Kraftwerkzeugen.

Alternativ ist eine Systemkiste 100 beispielsweise eine Kiste zum Transport von Filamentspulen 70, die auf Spindeln oder Dornen in der Systemkiste 100 aufgesteckt sind und somit einfach zugänglich sind.

Die Kopplungsschnittstelle 37 des 3D-Druckers 10 bzw. des Gehäuses 12 umfasst eine untere Kopplungsschnittstelle 37A, mit der der 3D-Drucker 10 bzw. das Gehäuse 12 in einem Zustand, in dem der 3D-Drucker bzw. das Gehäuse 12 auf eine Systemkiste 100 aufgesetzt ist, eine untere lösbare, vertikalzugfeste Kopplung zu der Systemkiste 100 herstellbar ist. Die Systemkiste 100 bildet in diesem Fall also in dem Stapel eine untere Systemkiste 100A.

Die Kopplungsschnittstelle 37 des 3D-Druckers 10 bzw. des Gehäuses 12 umfasst eine obere Kopplungsschnittstelle 37B, mit der in einem Zustand, in dem eine Systemkiste 100 auf den 3D-Drucker 10 bzw. das Gehäuse 12 aufgesetzt ist, eine obere lösbare, vertikalzugfeste Kopplung zu der Systemkiste 100 herstellbar ist. Die Systemkiste 100 bildet in diesem Fall, also in dem Stapel, eine obere Systemkiste 100B.

Die obere Kopplungsschnittstelle 37B umfasst exemplarisch mehrere obere Kopplungsabschnitte, die insbesondere an der Deckenwand 27 angeordnet sind. Exemplarisch umfassen die oberen Kopplungsabschnitte Kopplungsvertiefungen 39, die insbesondere an der Deckenwand 27 angeordnet sind. Zweckmäßigerweise umfassen die oberen Kopplungsabschnitte einen Drehriegel 35A, der insbesondere an einer der Seitenwände 12 oben angeordnet ist. In dem Ausführungsbeispiel ist der Drehriegel 35A oberhalb der Gehäuseöffnung 12D, also an der Vorderseite 14 des Gehäuses 12, angeordnet.

Der Drehriegel 35A ist in dem Beispiel am Deckel 13 angeordnet.

Die untere Kopplungsschnittstelle 37A umfasst exemplarisch mehrere untere Kopplungsabschnitte, die insbesondere an der Bodenwand 26 angeordnet sind. Exemplarisch umfassen die unteren Kopplungsabschnitte 37A untere Kopplungsvorsprünge 38, die insbesondere an der Bodenwand 26 angeordnet sind und beispielsweise als Gehäusefüße 29 ausgeführt sind. Zweckmäßigerweise umfassen die unteren Kopplungsabschnitte einen vorderen Verriegelungsvorsprung 36, der insbesondere an der gleichen Seitenwand 12 wie der Drehriegel 35A angeordnet ist.

Die Kopplungsschnittstelle 37 ist zweckmäßigerweise derart ausgeführt, dass sie mit einer identischen Kopplungsschnittstelle einer Systemkiste 100 koppelbar ist, welche auch als Systemkisten-Kopplungsschnittstelle 130 bezeichnet ist.

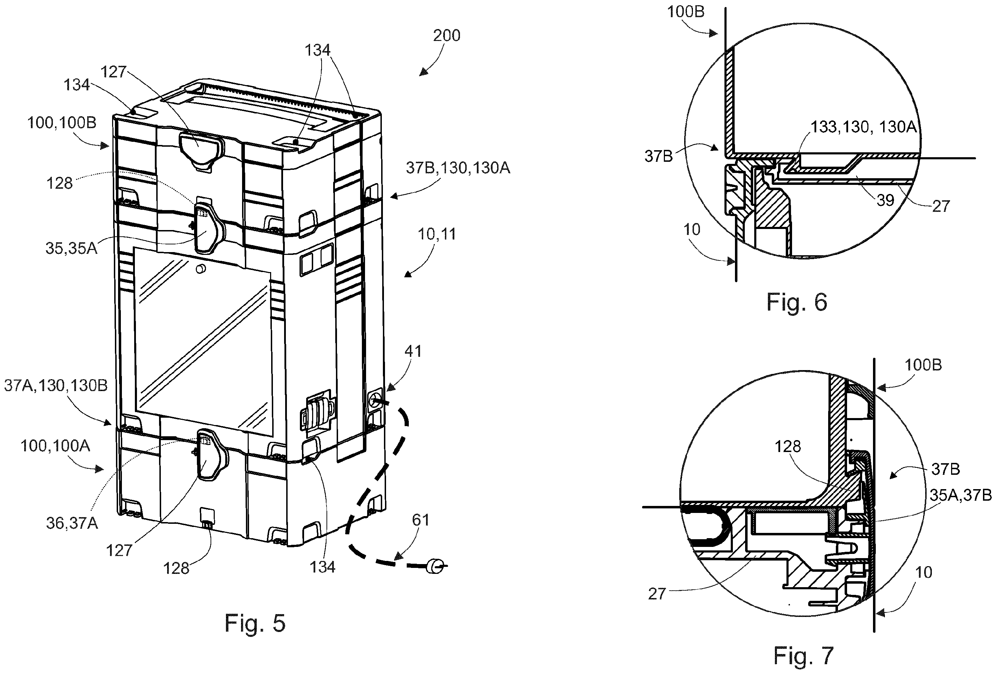

In Figuren 6 und 7 ist die obere Kopplungsschnittstelle 37B des 3D-Druckers 10 mit unteren Systemkisten-Kopplungsabschnitten 130A einer oberen Systemkiste 100B gekoppelt. Hierbei sind Systemkisten-Kopplungsvorsprünge 133 der Systemkisten-Kopplungsschnittstelle 130 in Eingriff mit den Kopplungsvertiefungen 39 und ein vorderer Systemkisten-Kopplungsvorsprung 128 der oberen Systemkiste 100B ist in Eingriff mit dem Kopplungsriegel 35.

Ebenso kann die untere Kopplungsschnittstelle 37A mit oberen Systemkisten-Kopplungsabschnitten 130B einer unteren Systemkiste 100A gekoppelt sein. Hierbei sind die unteren Kopplungsvorsprünge 38 in Eingriff mit Systemkisten-Kopplungsvertiefungen 134 der unteren Systemkiste 100A und der vordere Kopplungsvorsprung 36 ist in Eingriff mit einem Systemkisten-Verriegelungsmittel 127 der unteren Systemkiste 100A. Vorzugsweise kann dieselbe Systemkiste 100 wahlweise mit der unteren Kopplungsschnittstelle 37A oder mit der oberen Kopplungsschnittstelle 73B gekoppelt werden.

Die Kopplungsschnittstelle 37 umfasst mehrere Kopplungsabschnitte. Die Kopplungsabschnitte umfassen zweckmäßigerweise einen oder mehrere feststehende Kopplungsabschnitte, beispielsweise eine oder mehrere Kopplungsvertiefungen 39 und/oder eine oder mehrere Kopplungsvorsprünge 38. Zweckmäßigerweise umfasst die Kopplungsschnittstelle ferner wenigstens einen (exemplarisch genau einen) beweglich gelagerten Kopplungsabschnitt, beispielsweise einen Kopplungsriegel 35 oder eine Kopplungsklinke. Der Kopplungsriegel 35 ist insbesondere als Drehriegel, exemplarisch als T-förmiger Drehriegel 35A, ausgeführt.

Der 3D-Drucker 10 weist eine Gleichspannungsschnittstelle 40 zur Versorgung des 3D-Druckers 10 mit elektrischer Energie auf.

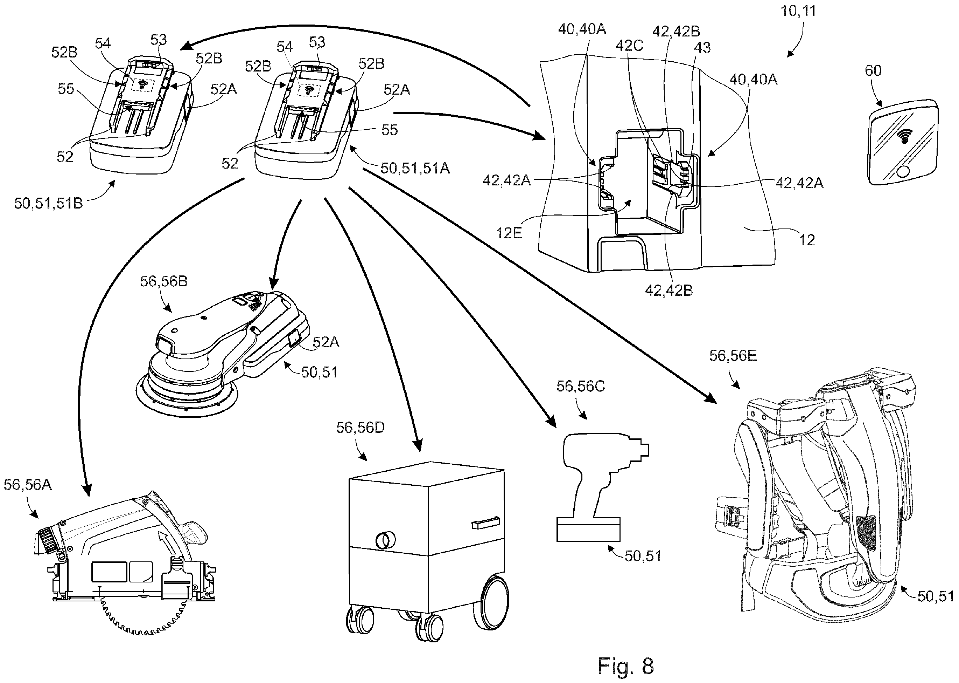

Wie insbesondere Figuren 8 und 9 zeigen, ist die Gleichspannungsschnittstelle 40 in einer Ausnehmung 12E des Gehäuses 12 angeordnet. Die Ausnehmung 12E ist ausgebildet eine Energiespeichereinheit 50 zur Versorgung des 3D-Druckers 10 mit elektrischer Energie aufzunehmen. In dem gezeigten Beispiel ist die Energiespeichereinheit 50 als Akkupack 51 ausgeführt. Insbesondere sind an der Gleichspannungsschnittstelle 40 zwei Akkupacks 51, nämlich ein erstes Akkupack 51A und ein zweites Akkupack 51B, anbringbar.

Die beiden Akkupacks 51A, 51B sind auf der gleichen Gehäuseseite des 3D-Druckers 10 angeordnet. Beispielsweise sind die beiden Akkupacks 51A, 51B in der gleichen Ausnehmung 12E angeordnet.

Die Gleichspannungsschnittstelle 40 weist zur mechanischen Kopplung der Energiespeichereinheit 50 mit der Gleichspannungsschnittstelle 40 eine mechanische Schnittstelle 42 zur lösbaren Befestigung der Energiespeichereinheit 50 an dem 3D-Drucker 10 auf.

In einem Zustand, in dem das Akkupack 51 mit der Gleichspannungsschnittstelle 40 gekoppelt ist, sind Akkupack-Leistungskontakte 55 der Akkupack-Schnittstelle 52 elektrisch leitend mit elektrischen Anschlusskontakten 42C der Gleichspannungsschnittstelle 40 verbunden.

In Figur 8 ist zu sehen, dass die mechanische Schnittstelle 42 Gleitschienen 42A zur Führung einer dem Akkupack 51 zugeordneten Akkupack-Schnittstelle 52 aufweist. Ferner weist die mechanische Schnittstelle 42 zwei Verrastungen 42B zur Arretierung des Akkupacks 51 in der Gleichspannungsschnittstelle 40 mittels zweier dem Akkupack 51 zugeordneten Riegelelemente 52B auf. Die Riegelelemente 52B sind ausgebildet in einem Zustand, in dem das Akkupack 51 mit der Gleichspannungsschnittstelle 40 gekoppelt ist, in die Verrastungen 42B einzugreifen, und somit das Akkupack 51 gegen unbeabsichtigte Entnahme zu sichern. Durch manuelle Betätigung von Entriegelelementen 52A werden die Riegelelemente 52B mit den Verrastungen 42B außer Eingriff gebracht, sodass das Akkupack 51 werkzeuglos gelöst und von der Schnittstelle 42 entfernt bzw. aus der Ausnehmung 12E entnommen werden kann.

Figur 8 zeigt ferner, dass der 3D-Drucker 10 eine Datenschnittstelle 43 zur Kommunikation von Daten mit einem externen Gerät 60 aufweist. Die Datenschnittstelle 43 ist an der Gleichspannungsschnittstelle 40 angeordnet. In anderen Worten ist die Datenschnittstelle 43 Teil der Gleichspannungsschnittstelle 40.

Im gezeigten Beispiel ist die Datenschnittstelle 43 dazu ausgebildet drahtgebunden mit einer Akkupack-Kommunikationseinheit zu kommunizieren. Die Akkupack-Kommunikationseinheit umfasst eine Akkupack-Datenschnittstelle 53 und eine Drahtlos-Datenschnittstelle 54. Die Akkupack-Datenschnittstelle 53 weist elektrische Kontakte auf, welche die Datenschnittstelle 43 in einem Zustand in dem das Akkupack 51 mit der Gleichspannungsschnittstelle 40 gekoppelt ist elektrisch kontaktieren. Die Drahtlos-Datenschnittstelle 54 ist ausgebildet mittels einer drahtlosen Kommunikation, beispielsweise mittels Bluetooth, mit dem externen Gerät 60 zu kommunizieren. Das externe Gerät 60 ist also informationstechnisch mit der Akkupack-Kommunikationseinheit, und somit mit dem 3D-Drucker 10 gekoppelt.

Die Akkupack-Datenschnittstelle 53 und die Drahtlos-Datenschnittstelle 54 sind in dem Akkupack 51 angeordnet.

Gemäß einem nicht näher dargestellten Beispiel ist es auch möglich, dass die Datenschnittstelle 43 zur drahtlosen Kommunikation von Daten mit einem externen Gerät 60 ausgebildet ist, beispielsweise mittels Bluetooth.

In der in den Figuren 1 bis 3 gezeigten Ausführungsform weist der 3D-Drucker 10 eine weitere Gleichspannungsschnittstelle zur Versorgung des 3D-Druckers 10 mit Energie auf. Die weitere Gleichspannungsschnittstelle kann zusätzlich oder alternativ zur Gleichspannungsschnittstelle 40 zur Kopplung von Akkupacks 51 an dem 3D-Drucker 10 vorgesehen sein.

Die Gleichspannungsschnittstelle 40 zur Kopplung von Akkupacks 51 kann auch als erste Gleichspannungsschnittstelle 40A und die weitere Gleichspannungsschnittstelle als zweite Gleichspannungsschnittstelle 40B bezeichnet werden.

Wenn sowohl die erste als auch die zweite Gleichspannungsschnittstelle an dem 3D-Drucker vorgesehen sind, kann die zweite Gleichspannungsschnittstelle 40B beispielsweis alternativ zu der ersten Gleichspannungsschnittstelle 40A zur Versorgung des 3D-Druckers 10 mit Energie verwendet werden.

Die erste Gleichspannungsschnittstelle 40A und die zweite Gleichspannungsschnittstelle 40B sind - wie z.B. in Figuren 1 bis 3 zu sehen ist - auf der gleichen Gehäuseseite des Gehäuses 12 angeordnet, was die Nutzerfreundlichkeit verbessert.

Die zweite Gleichspannungsschnittstelle 40B ist ausgebildet mit einer Energiequelle gekoppelt zu werden, die insbesondere kein Akkupack eines Kraftwerkzeugs ist. Beispielsweise ist die zweite Gleichspannungsschnittstelle 40B ein Anschluss für ein Netzgerät, um den 3D-Drucker mit elektrischer Energie zu versorgen. In dem Fall erfolgt also ein Netzbetrieb mittels eines Netzgerätes, welches eine Netzspannung in eine Gleichspannung umrichtet.

Es ist ebenso denkbar, dass der der 3D-Drucker 10 einen Netzanschluss 41 aufweist, sodass der 3D-Drucker direkt mit Wechselstrom betrieben werden kann, wie dies in Figur 5 gezeigt ist.

In dem in Figuren 1 bis 3 und 8 dargestellten Ausführungsbeispiel ist der 3D-Drucker 10 mit Akkupacks 51A, 51B eines Werkzeugsystems koppelbar, welches ein elektrische Kraftwerkzeug 56 mit einer kraftwerkzeugseitigen Akkupack-Schnittstelle zur Kopplung des elektrischen Kraftwerkzeugs 56 mit einem der Akkupacks 51A, 51B aufweist. Ein Akkupack 51 ist also wahlweise mit dem elektrischen Kraftwerkzeugs 56 oder dem 3D-Drucker 10 koppelbar, um diese mit elektrischer Energie zu versorgen. Dies verbessert die Nutzbarkeit und das Handling des Akkubetriebs verbessert bei der Nutzung des Werkzeugsystems, da alle Akkupacks mit dem gleichen Ladegerät geladen werden können.

Dies ist insbesondere dann der Fall, wenn die Akkupack-Schnittstelle des elektrischen Kraftwerkzeugs 56 und die Gleichspannungsschnittstelle 40 des 3D-Druckers 10 identisch ausgebildet sind. Alternativ kann auch vorgesehen sein, dass die Akkupack-Schnittstelle des elektrischen Kraftwerkzeugs 56 und die Gleichspannungsschnittstelle 40 des 3D-Druckers 10 nicht identisch ausgebildet sind, jedoch beide mit einem Akkupack 51 des Werkzeugsystems kompatibel sind.

In dem in Figur 8 dargestellten Beispiel eines Werkzeugsystems umfasst das Werkzeugsystem den 3D-Drucker 10, Akkupacks 51 und elektrische Kraftwerkzeuge 56. Die elektrischen Kraftwerkzeuge 56 sind beispielhaft eine elektrische Handkreissäge 56A, eine elektrische Schleifmaschine 56B, ein elektrischer Schrauber 56C, ein mobiler Staubsauger 56D und ein elektrisch betriebenes Exoskelett 56E. Jedes der elektrischen Kraftwerkzeuge 56 ist mit einem der Akkupacks 51, beispielsweise mit dem ersten Akkupack 51A, koppelbar, um mit Energie versorgt zu werden. Das Werkzeugsystem muss nicht mehrere elektrische Kraftwerkzeuge umfassen sondern kann auch nur ein elektrisches Kraftwerkzeug umfassen, insbesondere eines der vorstehend genannten elektrischen Kraftwerkzeuge 56.

Der 3D-Drucker 10 kann mit einem Verfahren betrieben werden, das die Schritte umfasst:
- Betreiben des 3D-Druckers 10 unabhängig von einem Netzanschluss mittels eines Akkupacks 51, 51A,
- Werkzeugloses Abziehen des Akkupacks 51, 51A von der Gleichspannungsschnittstelle 40 des 3D-Druckers 10,
- Weiterbetrieb des 3D-Druckers 10,
- Anstecken eines weiteren Akkupacks 51B an die Gleichspannungsschnittstelle 40 des 3D-Druckers 10.

Der weitere Akkupack 51B ist insbesondere ein Akkupack 51 des Werkzeugsystems. Somit weist der weitere Akkupack 51B eine Akkupack-Schnittstelle 52 auf, die mit der Gleichspannungsschnittstelle 40 kompatibel ist.

## Patentansprüche

1. 3D-Drucker (10) umfassend eine Werkstückauflage (18A) und einen Druckkopf (18B) zur additiven Herstellung eines Werkstücks, wobei zur Herstellung des Werkstücks die Werkstückauflage (18A) und der Druckkopf (18B) innerhalb eines Arbeitsraums (13C) in drei Raumrichtungen relativ zueinander positionierbar sind, wobei der 3D-Drucker eine Gleichspannungsschnittstelle (40) zur Versorgung des 3D-Druckers (10) mit elektrischer Energie aufweist, **dadurch gekennzeichnet,**
**dass** eine Energiespeichereinheit (50) lösbar mit der Gleichspannungsschnittstelle (40) koppelbar ist.

2. 3D-Drucker nach Anspruch 1, **dadurch gekennzeichnet, dass** die Gleichspannungsschnittstelle (40) eine, vorzugsweise Gleitschienen (42A) und zumindest eine Verrastung (42B) aufweisende, mechanische Schnittstelle (42) zur lösbaren Befestigung der Energiespeichereinheit (50) an dem 3D-Drucker (10) aufweist.

3. 3D-Drucker nach einem der Ansprüche 1 oder 2, **dadurch gekennzeichnet, dass** der 3D-Drucker (10) eine Datenschnittstelle (43) zur Kommunikation von Daten mit einem externen Gerät (60) aufweist, wobei die Datenschnittstelle (43) an der Gleichspannungsschnittstelle (40) angeordnet ist.

4. 3D-Drucker nach Anspruch 3, **dadurch gekennzeichnet, dass** die Datenschnittstelle (43) dazu ausgebildet ist, drahtlos mit dem externen Gerät (60) zu kommunizieren.

5. 3D-Drucker nach einem der vorherigen Ansprüche, **dadurch gekennzeichnet, dass** der 3D-Drucker (10) ein Gehäuse (12) aufweist,
wobei das Gehäuse den Arbeitsraum (13C) umgibt und/oder die Werkstückauflage (18A), der Druckkopf (18B) und der Arbeitsraum (13C) in dem Gehäuse (12) aufgenommen sind,
wobei die Gleichspannungsschnittstelle (40) an dem Gehäuse (12) in einer zur Aufnahme der Energiespeichereinheit (50) ausgebildeten Ausnehmung (12E) des Gehäuses (12) angeordnet ist.

6. 3D-Drucker nach einem der vorherigen Ansprüche, **dadurch gekennzeichnet, dass** die Gleichspannungsschnittstelle zwei Schnittstellen zur Kopplung mit zwei Akkupacks für ein elektrisches Kraftwerkzeug zur Versorgung des 3D-Druckers mit elektrischer Energie aufweist und/oder dass die Gleichspannungsschnittstelle (40) eine erste Gleichspannungsschnittstelle (40A) ist und der 3D-Drucker weiter eine zweite Gleichspannungsschnittstelle (40B) zur Versorgung des 3D-Druckers (10) mit Energie aufweist.

7. 3D-Drucker nach Anspruch 6, **dadurch gekennzeichnet,**
**dass** die zumindest zwei Gleichspannungsschnittstellen, insbesondere die erste Gleichspannungsschnittstelle (40A) und die zweite Gleichspannungsschnittstelle (40B), auf derselben Gehäuseseite des Gehäuses (12) angeordnet sind.

8. 3D-Drucker nach einem der Ansprüche 5 bis 7, **dadurch gekennzeichnet, dass** der 3D-Drucker (10), insbesondere das Gehäuse (12), eine Kopplungsschnittstelle (37) aufweist, mit der eine lösbare vertikalzugfeste Kopplung zu einer oder mehreren Systemkiste/-n (100) herstellbar ist, so dass der 3D-Drucker (10) zusammen mit der einen oder mehreren Systemkiste/-n (100) einen vertikalen Stapel bilden kann.

9. 3D-Drucker nach Anspruch 8, **dadurch gekennzeichnet, dass** die Kopplungsschnittstelle (37) eine untere Kopplungsschnittstelle (37A) umfasst, mit der in einem Zustand, in dem der 3D-Drucker (10) auf eine untere Systemkiste (100A) aufgesetzt ist, eine untere lösbare, vertikalzugfeste Kopplung zu der unteren Systemkiste (100A) herstellbar ist, und/oder eine obere Kopplungsschnittstelle (37B) umfasst, mit der in einem Zustand, in dem eine obere Systemkiste (100B) auf den 3D-Drucker (10) aufgesetzt ist, eine obere lösbare, vertikalzugfeste Kopplung zu der oberen Systemkiste (100B) herstellbar ist.

10. 3D-Druckeinheit **gekennzeichnet durch** einen 3D-Drucker (10) nach einem der vorherigen Ansprüche und eine an der Gleichspannungsschnittstelle (40) des 3D-Druckers (10) lösbar befestigte Energiespeichereinheit (50).

11. 3D-Druckeinheit nach Anspruch 10, **dadurch gekennzeichnet, dass** die Energiespeichereinheit (50) als ein Akkupack (51) für ein elektrisches Kraftwerkzeug (56) ausgebildet ist und
dass das Akkupack (51) eine Akkupack-Datenschnittstelle (53) und eine mit der Akkupack-Datenschnittstelle (53) kommunizierende Drahtlos-Datenschnittstelle (54) zur Kommunikation mit einem/dem externen Gerät (60) aufweist, wobei die Akkupack-Datenschnittstelle (54) mit einer/der Datenschnittstelle (43) des 3D-Druckers (10) gekoppelt ist.

12. Stapelanordnung (200) umfassend ein erstes und ein zweites Stapelelement,
wobei das erste Stapelelement den 3D-Drucker (10) nach einem der Ansprüche 1 bis 9 oder die 3D-Druckeinheit (11) nach einem der Ansprüche 10 oder 11 umfasst und das zweite Stapelelement eine Systemkiste (100), vorzugsweise zur Aufnahme eines elektrischen Kraftwerkzeugs (56) oder zur Aufnahme von Filamentspulen für den 3D-Drucker (10), umfasst
wobei das erste Stapelelement auf das zweite Stapelelement aufgesetzt ist oder das zweite Stapelelement auf das erste Stapelelement aufgesetzt ist,
wobei die beiden Stapelelemente vertikalzugfest lösbar miteinander gekoppelt sind, um von einem Nutzer getragen zu werden.

13. Werkzeugsystem aufweisend den 3D-Drucker (10) nach einem der Ansprüche 1 bis 9, ein elektrisches Kraftwerkzeug (56) mit einer kraftwerkzeugseitigen Akkupack-Schnittstelle zur Kopplung des elektrischen Kraftwerkzeugs (56) mit einem Akkupack, sowie einer Energiespeichereinheit (50), welche als Akkupack (51) für ein elektrisches Kraftwerkzeug ausgebildet ist, **dadurch gekennzeichnet, dass**
das Akkupack (51) wahlweise entweder mit der kraftwerkzeugseitigen Akkupack-Schnittstelle des elektrischen Kraftwerkzeugs (56) lösbar verbindbar ist, um das elektrische Kraftwerkzeug (56) mit Energie zu versorgen oder mit der Gleichspannungsschnittstelle (40) des 3D-Druckers (10) lösbar verbindbar ist, um den 3D-Drucker (10) mit Energie zu versorgen.

14. Verfahren zum Abziehen eines Akkupacks (51,51A) von dem 3D-Drucker (10) nach einem der Ansprüche 1 bis 9, **dadurch gekennzeichnet, dass** die als Akkupack (51,51A) ausgeführte Energiespeichereinheit (50) werkzeuglos von der Gleichspannungsschnittstelle (40) des 3D-Druckers (10) abgezogen wird.

15. Verfahren nach Anspruch 14, **dadurch gekennzeichnet, dass** der Akkupack (51,51A) während eines Arbeitsvorgangs des 3D-Druckers von der Gleichspannungsschnittstelle (40) des 3D-Druckers (10) abgezogen wird, der Arbeitsvorgang durch das Abziehen nicht unterbrochen wird und ein weiterer Akkupack (51B) an die Gleichspannungsschnittstelle (40) des 3D-Druckers (10) angesteckt wird.
